# EUROPEAN PATENT APPLICATION

(11) **EP 2 346 273 A1**
(43) Date of publication of application: **20.07.2011**
(21) Application number: 09823069.1
(22) Date of filing: 27.10.2009
(51) Int. Cl.: H04W 4/16, H04M 3/42

(54) **METHOD AND SYSTEM FOR REALIZING CALLED CONFIRMATION PAYING SERVICE**

(30) Priority: 27.10.2008 CN 200810172512
(71) Applicant: Huawei Technologies Co., Ltd., Longgang District, Shenzhen Guangdong 518129 (CN)
(72) Inventor: ZHANG, Wenhu, Guangdong 518129 (CN); HU, Haihua, Guangdong 518129 (CN); CAI, Yongfeng, Guangdong 518129 (CN)
(74) Representative: Pfenning, Meinig & Partner GbR
(86) International application number: PCT/CN2009/074633
(87) International publication number: WO 2010/048877

(57) **Abstract**

A method and a system for realizing a called-party confirmation paying service are provided. The method for realizing the called-party confirmation paying service includes the following steps. A mobile collect call (MCC) platform receives a call triggered by a calling party (S101). The MCC platform notifies the called party of a call access and receives a response made by the called party for the notice to connect a speech path between the calling party and the called party (S102). The MCC platform sends a called-party paying request, and starts charging (S103). The system for realizing the called-party confirmation paying service includes a calling MSC, a called MSC, and an MCC platform. The method and the system for realizing the called-party confirmation paying service are suitable for confirmation of a paying service performed by the called party during a call.

## Description

The application claims priority to Chinese Patent Application No. 200810172512.0, filed on October 27, 2008, and entitled "METHOD AND SYSTEM FOR REALIZING CALLED-PARTY CONFIRMATION PAYING SERVICE", which is incorporated herein by reference in its entirety.

### FIELD OF THE TECHNOLOGY

The present invention relates to the field of call service technology, and more particularly to a method and a system for realizing a called-party confirmation paying service.

### BACKGROUND OF THE INVENTION

Currently, according to demands of communication services, in some call procedures, communication charges generated from a call initiated by a calling user need to be paid by a called party. A mobile collect call (MCC) is a service in which the called party pays charges of the current call for the calling party. After the calling party calls the called party, an MCC system notifies the called party in a certain manner and queries whether the called party is willing to pay for the current call. If the called party refuses to pay the call charges of the current call, the MCC system interrupts the current call. If the called party agrees to pay the call charges of the current call, the MCC system connects a speech path of the called party. After the call ends, the charges of the current call are paid by the called party.

A key technology for realizing the service lies in that, after receiving a call request of the calling party, the MCC system notifies the called party and queries whether the called party agrees to pay the charges of the current call. In the prior art, Play and Collect (PC) is performed on the called party by using capabilities of Customized Applications for Mobile Network Enhanced Logic (CAMEL4) or expanded Intelligent Network Application Protocol Capability Set 1 (INAP CS1). After the called party confirms, a speech path between the calling party and the called party is realized through bridge connection.

During a procedure of implementing the present invention, the inventors find that the prior art has at least the following problems.

The solution of the prior art requires that a core network supports expanded capabilities of CAMEL4 or INAP CS1, while an existing core network generally has standard capabilities of CAMEL2 or INAP CS1 only. If the existing solution is used, the core network needs to be reconstructed, and the implementation cost is higher, which are adverse to the development of the MCC service.

### SUMMARY OF THE INVENTION

Embodiments of the present invention provide a method and a system for realizing a called-party confirmation paying service, which are capable of reducing the implementation cost.

In order to achieve the objectives, embodiments of the present invention provide the following technical solutions.

An embodiment of the present invention provides a method for realizing a called-party confirmation paying service, which includes the following steps.

An MCC platform receives a call triggered by a calling party.

The MCC platform notifies a called party of a call access, and receives a response made by the called party for the notice, to connect a speech path between the calling party and the called party.

The MCC platform sends a called-party paying request and starts charging.

An embodiment of the present invention provides a system for realizing a called-party confirmation paying service, where the system includes a calling Mobile Switching Center (MSC), a called MSC, and an MCC platform.

The calling MSC is configured to receive a call request initiated by a calling party, and connect the call to the MCC platform.

The MCC platform is configured to connect the call to the called MSC, and send a called-party paying request after a speech path is connected between the calling party and a called party.

The called MSC is configured to connect the call to the called party.

With the method and the system for realizing the called-party confirmation paying service according to the embodiment of the present invention, a calling party triggers a call to an MCC platform through a calling MSC, the MCC platform notifies a called party of a call access through a called MSC, and the called party chooses whether to accept the MCC service. Compared with the conventional technologies, the present invention needs not to reconstruct an existing core network, and the implementation cost is lower, which are helpful for the development of the called-party paying service.

An embodiment of the present invention provides a method and a system for realizing a called-party confirmation paying service, which are capable of reducing the implementation cost.

An embodiment of the present invention provides a method for realizing a called-party confirmation paying service, which includes the following steps.

An MCC platform receives information sent by a calling party.

The MCC platform returns response information to the calling party.

The MCC platform notifies a called party of a call access, and receives a response made by the called party for the notice.

The MCC platform calls the calling party, and the calling party makes an answer for connecting a speech path between the calling party and the called party for the call.

The MCC platform sends a called-party paying request and starts charging.

The present invention provides a system for realizing a called-party confirmation paying service, where the system includes a calling MSC, a called MSC, a Gateway MSC (GMSC), and an MCC platform.

The calling MSC is configured to receive a call request initiated by a calling party, and connect the call to the MCC platform.

The MCC platform is configured to connect the call to the GMSC, and send a called-party paying request after a speech path is connected between the calling party and a called party.

The GMSC is configured to receive the call initiated by the MCC platform, acquire a roaming number of the calling party or the called party, and connect the call to the calling party or the called party according to the roaming number.

The called MSC is configured to connect the call to the called party.

With the method and the system for realizing the called-party confirmation paying service according to the embodiment of the present invention, a calling party triggers a call to an MCC platform through a calling MSC, the MCC platform notifies a called party of a call access through a called MSC, and the called party chooses whether to accept the MCC service. Compared with the prior art, the present invention needs not to reconstruct an existing core network, and the implementation cost is lower, which are helpful for the development of the called-party paying service.

### BRIEF DESCRIPTION OF THE DRAWINGS

To illustrate the technical solution according to the embodiments of the present invention more clearly, the accompanying drawings for describing the embodiments or the prior art are given below. Apparently, the accompanying drawings in the following description are only some embodiments of the present invention, and persons of ordinary skill in the art can derive other drawings from the accompanying drawings without creative efforts.
FIG. 1 is a flow chart of a method for realizing a called-party confirmation paying service according to an embodiment of the present invention;
FIG. 2 is a flow chart of a method for realizing a called-party confirmation paying service according to another embodiment of the present invention;
FIG. 3 is a flow chart of a method for realizing a called-party confirmation paying service according to another embodiment of the present invention;
FIG. 4 is a flow chart of a method for realizing a called-party confirmation paying service according to another embodiment of the present invention;

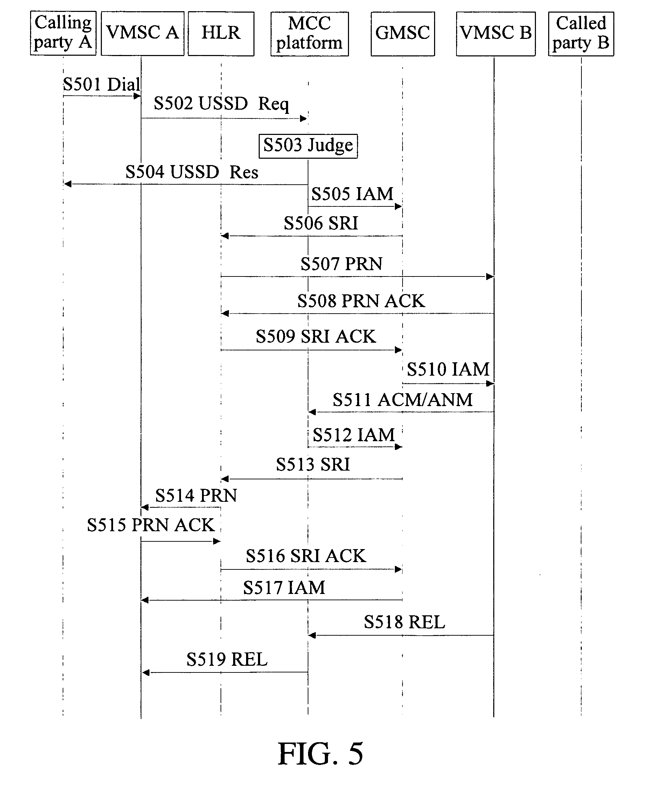

FIG. 5 is a flow chart of a method for realizing a called-party confirmation paying service according to another embodiment of the present invention;
FIG. 6 is a schematic structural view of a system for realizing a called-party confirmation paying service according to an embodiment of the present invention; and
FIG. 7 is a schematic structural view of a system for realizing a called-party confirmation paying service according to another embodiment of the present invention.

### DETAILED DESCRIPTION OF THE EMBODIMENTS

The following detailed description is directed to the technical solution of the present invention with reference to the accompanying drawings. However, the embodiments to be described are only part of, rather than all of, the embodiments of the present invention. Persons having ordinary skill in the art can derive other embodiments from the embodiments given herein without creative effort, and all such embodiments are covered in the protection scope of the present invention.

Embodiments of the present invention provide a method and a system for realizing a called-party confirmation paying service.

In order to make advantages of the technical solutions of the present invention more comprehensible, a detailed description of the present invention is given below with reference to the accompanying drawings and embodiments.

An embodiment of the present invention provides a method for realizing a called-party confirmation paying service, where the method is capable of reducing the implementation cost**.**

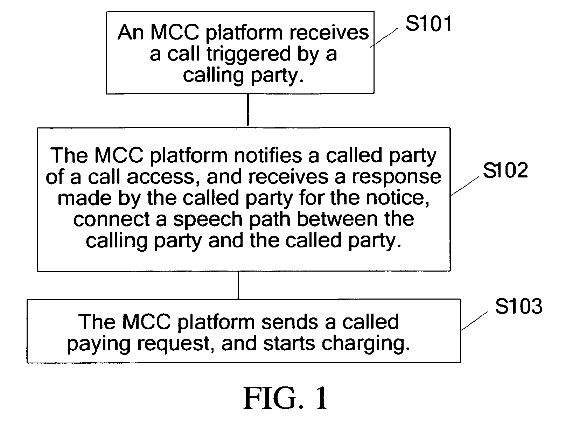

As shown in FIG. 1, the method for realizing the called-party confirmation paying service includes the following steps.

In step S101, an MCC platform receives a call triggered by a calling party.

In step S102, the MCC platform notifies the called party of a call access and receives a response made by the called party for the notice, to connect a speech path between the calling party and the called party.

In step S103, the MCC platform sends a called-party paying request, and starts charging.

With the method for realizing the called-party confirmation paying service according to the embodiment of the present invention, a calling party triggers a call to an MCC platform through a calling MSC, the MCC platform notifies a called party of a call access through a called MSC, and the called party chooses whether to accept the MCC service. Compared with the prior art, the present invention needs not to reconstruct an existing core network, and the implementation cost is lower, which are helpful for the development of the called-party paying service.

In an embodiment, the present invention provides another method for realizing a called-party confirmation paying service. In this embodiment, before a called party is connected, an MCC platform notifies, by using Unstructured Supplementary Service Data (USSD), the called party of the incoming of an MCC call, and the called party accepts or refuses the MCC call by replying the USSD notification. User A is the calling party, and user B is the called party.

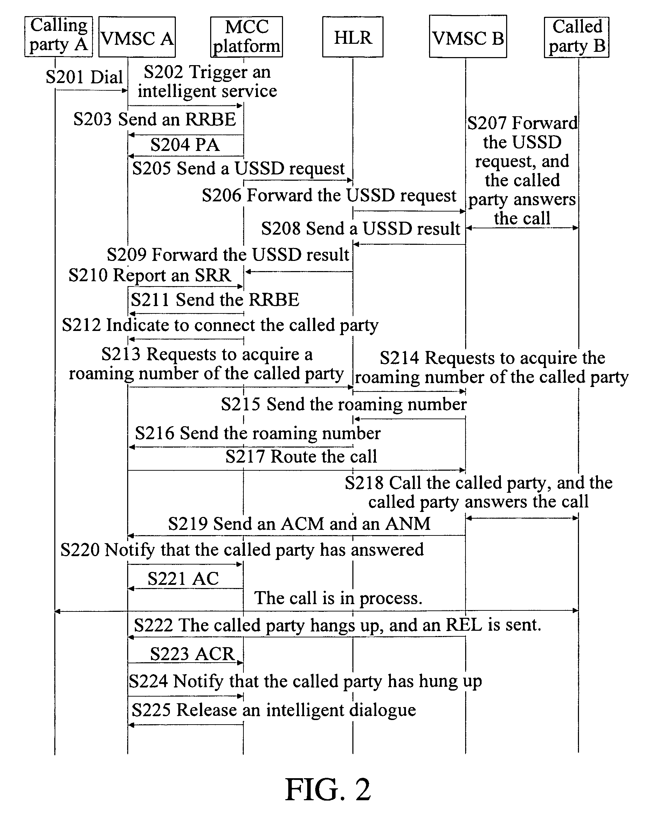

As shown in FIG. 2, the method for realizing the called-party confirmation paying service includes the following steps.

In step S201, user A calls user B by dialing a first called number.

The first called number includes a local called-party paying service access code and a called user number. For example, user A with a number being "12355555555" dials a first called number "70+12388888888", where "70" is the local called-party paying service access code and "12388888888" is the called user number.

In step S202, Visit Mobile Switching Center (VMSC) A triggers an intelligent call to an MCC platform according to the access code.

An MSC in which user A is located determines, according to the called-party paying service access code being "70" in the called number, that the current call needs to be connected to the MCC platform.

The MCC platform further performs call filtering, so as to judge whether the user with the calling number is capable of dialing the MCC call. The MCC platform stores a black list, and the user with the calling number in the black list cannot call user B by dialing the MCC call. In this embodiment, the number "12355555555" is not in the black list, so that user A can call user B by dialing the MCC call.

In step S203, the MCC platform sends a Request Report BCSM Event (RRBE) to VMSC A for requesting a monitoring event.

In step S204, the MCC platform sends Play Announcement (PA) to VMSC A to perform the PA on the calling party, where content of the PA can be that "Please hold on, the MCC platform is connecting the called party".

In step S205, the MCC platform sends a call request to a Home Location Register (HLR).

The call request is in a form of USSD.

In step S206, the HLR forwards the USSD call request to VMSC B.

In step S207, VMSC B forwards the USSD call request to the called party.

The USSD call request includes prompt content of "You have one MCC call, and the calling number is 12355555555. Press 1 to answer the call, and Press 2 to refuse the call".

In step S208, the called party presses 1 to answer the call, and VMSC B sends a response result to the HLR.

The response result is in the form of USSD.

In step S209, the HLR forwards the USSD response result to the MCC platform.

In step S210, VMSC A reports a Special Resource Report (SRR) to the MCC platform.

Step 210 corresponds to step S204, in which the MCC platform sends the PA to VMSC A to perform the PA on the calling party.

In step S211, the MCC platform sends the RRBE to VMSC A for requesting a monitoring event.

The RRBE is different from the RRBE in step S203 in that the requested monitoring events are different.

In step S212, the MCC platform sends a CONNECT instruction to VMSC A to instruct VMSC A to connect the called party.

In step S213, VMSC A requests, from the HLR, routing information.

VMSC A in which user A is located sends a message of Send Routing Information (SRI) for acquiring routing information of user B to the HLR, and requests to acquire a roaming number of user B.

In step S214, the HLR requests, from VMSC B, the roaming number.

The HLR sends a message of Provide Roaming Number (PRN) for acquiring the roaming number of user B to VMSC B in which user B is located.

In step S215, VMSC B sends back the roaming number to the HLR.

The MSC in which user B is located returns the roaming number of user B to the HLR.

In step S216, the HLR sends back the roaming number to VMSC A.

The HLR returns the roaming number of user B to the MSC in which user A is located.

In step S217, VMSC A connects the call to VMSC B.

VMSC A sends an Initial Address Message (IAM) to VMSC B, and connects the call to the MSC in which user B is located.

In step S218, VMSC B calls the called party, and the called party answers the call.

VMSC B in which user B is located connects the call to user B. At this time, a terminal of user B rings, and user B picks up the telephone. At this time, VMSC B sends an Answer Message (ANM) to VMSC A.

In step S219, VMSC B sends an Address Complete Message (ACM)/ANM to VMSC A.

VMSC B in which user B is located returns the ACM to VMSC A in which user A is located.

In step S220, VMSC A sends an Event Report BCSM (ERB) to the MCC platform, so as to notify the MCC platform that the called party has answered the call.

The ERB corresponds to the RRBE sent by the MCC platform in step S211.

In step S221, the MCC platform sends an Apply Charge (AC) to VMSC A, and starts charging

At this time, the MCC platform connects a speech path between a calling user terminal and a called user terminal, and user A and user B enter a call process.

In step S222, the called party hangs up, and VMSC B sends an REL to VMSC A.

When user B hangs up, the MSC in which user B is located sends the REL to the MSC in which user A is located.

In step S223, VMSC A sends an Apply Charges Report (ACR) to the MCC platform.

In step S224, VMSC A sends the ERB to the MCC platform, so as to notify the MCC platform that the called party has hung up.

The ERB corresponds to the RRBE sent by the MCC platform in step S203.

In step S225, the MCC platform sends a Release Call (RC) to VMSC A, so as to release an intelligent dialogue.

Through the foregoing process, the call between user A and user B ends.

In an embodiment, the present invention provides another method for realizing a called-party confirmation paying service. In this embodiment, before a called party is connected, an MCC platform notifies, in a manner of PC, the called party of the incoming of an MCC call, and the called party determines whether to answer the MCC call. User A is the calling party, and user B is the called party.

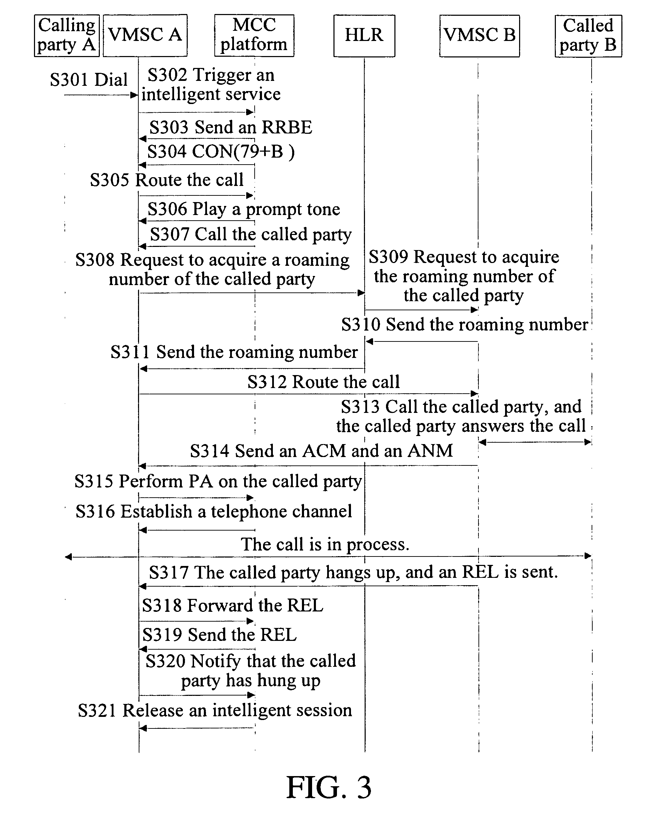

As shown in FIG. 3, the method for realizing the called-party confirmation paying service includes the following steps.

In step S301, user A calls user B by dialing a first called number.

The first called number includes a local called-party paying service access code and a called user number. For example, user A with a number being "12355555555" dials a first called number "70+12388888888", where "70" is the local called-party paying service access code and "12388888888" is the called user number.

In step S302, VMSC A triggers an intelligent call to the MCC platform according to the access code.

An MSC in which user A is located determines, according to the called-party paying service access code being "70" in the called number, that the current call needs to be connected to the MCC platform.

The MCC platform further performs call filtering, so as to judge whether the user with the calling number is capable of dialing the MCC call. The MCC platform stores a black list, and the user with the calling number in the black list cannot call user B by dialing the MCC call. In this embodiment, the number "12355555555" is not in the black list, so that user A can call user B by dialing the MCC call.

In step S303, the MCC platform sends an RRBE to VMSC A for requesting a monitoring event.

In step S304, the MCC platform sends a CONNECT to VMSC A, and a particular prefix is added in front of the called number, so that VMSC A can route the call to the MCC platform according to the prefix.

In step S305, VMSC A routes the call to the MCC platform according to the added prefix.

A procedure of routing the call adopts an ISUP protocol.

In step S306, the MCC platform sends an ACM to VMSC A, and plays a prompt tone of "Please hold on, the MCC platform is connecting the called party" to the calling party.

In step S307, the MCC platform sends an IAM to VMSC A to call the called party.

In step S308, VMSC A requests, from an HLR, routing information.

VMSC A in which user A is located sends a message of SRI for acquiring routing information of user B to the HLR, and requests to acquire a roaming number of user B.

In step S309, the HLR requests, from VMSC B, the roaming number.

The HLR sends a message of PRN for acquiring the roaming number of user B to VMSC B in which user B is located.

In step S310, VMSC B sends back the roaming number to the HLR.

The MSC in which user B is located returns the roaming number of user B to the HLR.

In step S311, the HLR sends back the roaming number to VMSC A.

The HLR returns the roaming number of user B to the MSC in which user A is located.

In step S312, VMSC A connects the call to VMSC B.

VMSC A sends the IAM to VMSC B, and connects the call to the MSC in which user B is located.

In step S313, VMSC B calls the called party, and the called party answers the call.

VMSC B in which user B is located connects the call to user B. At this time, a terminal of user B rings, and user B picks up the telephone. At this time, VMSC B sends an ANM to VMSC A.

In step S314, VMSC B sends an ACM/ANM to VMSC A.

VMSC B in which user B is located returns the ACM to VMSC A in which user A is located.

In step S315, VMSC A forwards the ACM/ANM to the MCC platform, the MCC platform performs the PA on the called party, where the content is that "This is an MCC call, and the calling number is ... Press 1 to answer the call, and Press 2 to refuse the call", and the called party chooses to answer the MCC call.

In step S316, the MCC platform sends the ANM to VMSC A, and a speech path between the calling party and the called party is established.

At this time, the MCC platform connects the speech path between a calling user terminal and a called user terminal, and user A and user B enter a call process.

In step S317, the called party hangs up, and VMSC B sends an REL to VMSC A.

When user B hangs up, the MSC in which user B is located sends the REL to the MSC in which user A is located.

In step S318, VMSC A forwards the REL to the MCC platform.

In step S319, the MCC platform sends the REL to VMSC A.

In step S320, VMSC A sends the ERB to the MCC platform, so as to notify the MCC platform that the called party has hung up.

The ERB corresponds to the RRBE sent by the MCC platform in step S303.

In step S321, the MCC platform sends an RC to VMSC A, so as to release an intelligent dialogue.

Through the foregoing process, the call between user A and user B ends.

Hence, through the method for realizing the called-party confirmation paying service according to the embodiment of the present invention, the implementation cost is reduced, which is helpful for the development of the MCC service.

In an embodiment, the present invention provides another method for realizing a called-party confirmation paying service, where the method is capable of reducing the implementation cost.

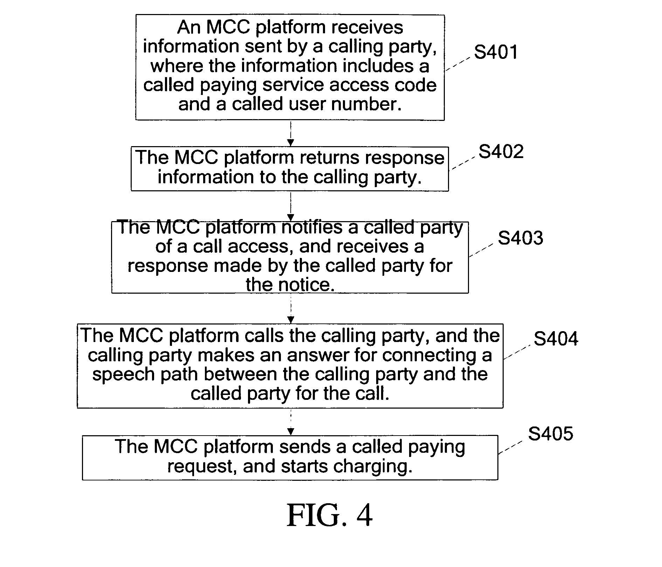

As shown in FIG. 4, the method for realizing the called-party confirmation paying service includes the following steps.

In step S401, an MCC platform receives information sent by a calling party, where the information includes a called-party paying service access code and a called user number.

In step S402, the MCC platform returns response information to the calling party.

In step S403, the MCC platform notifies a called party of a call access, and receives a response made by the called party for the notice.

In step S404, the MCC platform calls the calling party, and the calling party makes an answer for connecting a speech path between the calling party and the called party for the call.

In step S405, the MCC platform sends a called-party paying request, and starts charging.

In the method for realizing the called-party confirmation paying service according to the embodiment of the present invention, a calling party triggers a call to an MCC platform through a calling MSC, the MCC platform notifies a called party of a call access through a called MSC, and the called party chooses whether to accept the MCC service. Compared with the prior art, the present invention needs not to reconstruct an existing core network, and the implementation cost is lower, which are helpful for the development of the called-party paying service.

In an embodiment, the present invention provides another method for realizing a called-party confirmation paying service. In this embodiment, an MCC call is initiated in an intelligent network USSD or SMS manner, and the MCC platform firstly performs the confirmation for the called party in a speech manner, and then connects the calling party.

In step S501, user A calls user B by dialing a first called number.

The first called number includes a local called-party paying service access code and a called user number. For example, user A with a number being "12355555555" dials a first called number "70+12388888888", where "70" is the local called-party paying service access code and "12388888888" is the called user number.

In step S502, VMSC A sends a USSD message to the MCC platform according to a USSD access code.

In step S503, only after judging that the called party needs to be confirmed, can the MCC platform answer the MCC call.

In step S504, the MCC platform returns USSD response information to the calling party.

In step S505, the MCC platform initiates an IAM message to call the called party B to a GMSC.

The MCC platform routes the call to the GMSC.

In step S506, the GMSC requests, from the HLR, called routing information.

The GMSC sends a message of SRI for acquiring routing information of user B to the HLR, and requests to acquire a roaming number of user B.

In step S507, the HLR requests, from VMSC B, the roaming number of the called party.

The HLR sends a message of PRN for acquiring the roaming number of user B to the MSC in which user B is located.

In step S508, VMSC B sends back the roaming number of the called party to the HLR.

The MSC in which user B is located returns the roaming number of user B to the HLR.

In step S509, the HLR sends back the roaming number of the called party to the GMSC.

The HLR returns the roaming number of user B to the GMSC.

In step S510, the GMSC sends the IAM to call the called party, and the called party answers the call.

The GMSC connects the call to user B. At this time, a terminal of user B rings, and user B picks up the telephone.

In step S511, VMSC B forwards an ACM/ANM to the MCC platform, the MCC platform performs PA on the called party, where the content is that "This is one MCC call, and the calling number is ... Press 1 to answer the call, and Press 2 to refuse the call", and the called party chooses to answer the MCC call.

In step S512, the MCC platform initiates the IAM message to call the calling party A to the GMSC.

In step S513, the GMSC requests, from the HLR, routing information of the calling party.

The GMSC sends the message of SRI for acquiring the routing information of user A to the HLR, and requests to acquire a roaming number of user A.

In step S514, the HLR requests, from VMSC B, a roaming number of the calling party.

The HLR sends a message of PRN for acquiring the roaming number of user A to the MSC in which user A is located.

In step S515, VMSC B sends back the roaming number of the calling party to the HLR.

The MSC in which user A is located returns the roaming number of user A to the HLR.

In step S516, the HLR sends back the roaming number of the calling party to the GMSC.

The HLR returns the roaming number of user A to the GMSC.

In step S517, the GMSC sends the IAM to call the calling party, and the calling party answers the call.

At this time, the MCC platform connects a call speech path between a calling user terminal and a called user terminal, and user A and user B enter a call process.

In step S518, the called party hangs up, and VMSC B sends an REL to the MCC platform.

When user B hangs up, the MSC in which user B is located sends the REL to the MCC platform.

In step S519, the MCC platform sends the REL to VMSC A.

Through the foregoing process, the call between user A and user B ends.

Hence, through the method for realizing the called-party confirmation paying service according to the embodiment of the present invention, the implementation cost is reduced, which is helpful for the development of the MCC service.

An embodiment of the present invention further provides a system for realizing a called-party confirmation paying service, where the system is capable of reducing the implementation cost.

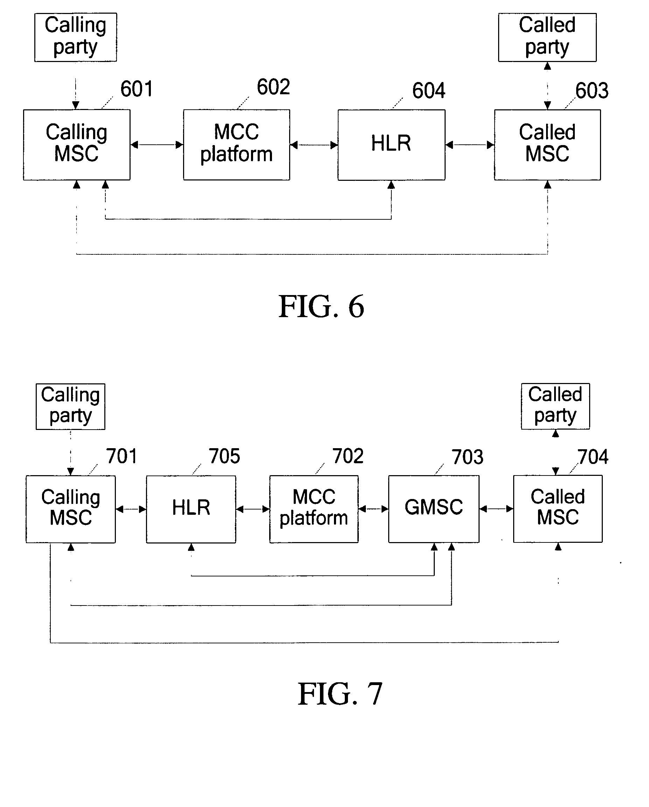

As shown in FIG. 6, the system includes a calling MSC 601, an MCC platform 602, and a called MSC 603.

The calling MSC 601 is configured to receive a call request initiated by a calling party, and connect the call to the MCC platform 602.

The MCC platform 602 is configured to connect the call to the called MSC 603, and send a called-party paying request after a speech path is connected between the calling party and a called party.

The called MSC 603 is configured to connect the call to the called party.

The system further includes an HLR 604.

The HLR 604 is configured to store and forward a roaming number of the called party.

In the system for realizing the called-party confirmation paying service according to the embodiment of the present invention, a calling party triggers a call to an MCC platform through a calling MSC, the MCC platform notifies a called party of a call access through a called MSC, and the called party chooses whether to accept the MCC service. Compared with the prior art, the present invention needs not to reconstruct an existing core network, and the implementation cost is lower, which are helpful for the development of the called-party paying service.

In an embodiment, the present invention further provides another system for realizing a called-party confirmation paying service, where the system is capable of reducing the implementation cost.

As shown in FIG. 7, the system includes a calling MSC 701, an MCC platform 702, a GMSC 703, and a called MSC 704.

The calling MSC 701 is configured to receive a call request initiated by a calling party, and connect the call to the MCC platform 702.

The MCC platform 702 is configured to connect the call to GMSC 703, and send a called-party paying request after a speech path is connected between the calling party and a called party.

The GMSC 703 is configured to receive a call initiated by the MCC platform 702, acquire a roaming number of the calling party or the called party, and connect the call to the calling party or the called party according to the roaming number.

The called MSC 704 is configured to connect the call to the called party.

The system further includes an HLR 705.

The HLR 705 is configured to store or forward the roaming number of the calling party or the called party.

In the system for realizing the called-party confirmation paying service according to the embodiment of the present invention, a calling party triggers a call to an MCC platform through a calling MSC, the MCC platform notifies a called party of a call access through a called MSC, and the called party chooses whether to accept the MCC service. Compared with the prior art, the present invention needs not to reconstruct an existing core network, and the implementation cost is lower, which are helpful for the development of the called-party paying service.

Persons having ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, an optical disk, a read-only memory (ROM), or a random access memory (RAM).

In conclusion, the above descriptions are merely some exemplary embodiments of the present invention. However, the scope of the present invention is not limited to these embodiments. Changes or replacements readily apparent to persons skilled in the prior art within the technical scope of the present invention should fall within the protection scope of the present invention. Therefore, the protection scope of the present invention is subject to the appended claims.

## Claims

1. A method for realizing a called-party confirmation paying service, **characterized by** comprising:
receiving, by a mobile collect call, MCC, platform, a call triggered by a calling party;
notifying, by the MCC platform, a called party of a call access, and receiving a response made by the called party for the notice to connect a speech path between the calling party and the called party; and
sending, by the MCC platform, a called-party paying request, and starting charging.

2. The method for realizing a called-party confirmation paying service according to claim 1, wherein the receiving, by the MCC platform, the call triggered by the calling party comprises:
receiving, by the MCC platform, a call forwarded by a calling Mobile Switching Center, MSC, wherein the call is triggered to the calling MSC by the calling party according to a called-party paying service access code and a called user number.

3. The method for realizing a called-party confirmation paying service according to claim 1 or 2, wherein before the notifying, by the MCC platform, the called party of the call access, the method further comprises:
performing, by the MCC platform, Play Announcement, PA, on the calling MSC, and sending a prompt that the MCC platform is connecting the called party to the calling party.

4. The method for realizing a called-party confirmation paying service according to claim 1, wherein the notifying, by the MCC platform, the called party of the call access, and receiving the response made by the called party for the notice to connect the speech path between the calling party and the called party comprises:
sending, by the MCC platform, Unstructured Supplementary Service Data, USSD, to the called party, and notifying the called party of a call access;
receiving, by the MCC platform, a response made by the called party for the notice;
instructing, by the MCC platform, a calling MSC to connect the called party;
acquiring, by the calling MSC, a roaming number of the called party; and
connecting, by the calling MSC, the call to the called party according to the roaming number of the called party.

5. The method for realizing a called-party confirmation paying service according to claim 1, wherein the notifying, by the MCC platform, the called party of the call access, and the receiving the response made by the called party for the notice to connect the speech path between the calling party and the called party comprises:
sending, by the MCC platform, an instruction to a calling MSC, and routing, by the calling MSC, the call to the MCC platform according to the instruction;
routing, by the MCC platform, the call to the calling MSC;
acquiring, by the calling MSC, a roaming number of the called party;
connecting, by the calling MSC, the call to the called party according to the roaming number of the called party;
performing, by the MCC platform, PA on the called party, and notifying the called party of the call access; and
answering, by the called party, the call, and establishing the speech path between the calling party and the called party.

6. The method for realizing a called-party confirmation paying service according to claim 4, wherein the sending, by the MCC platform, information to the called party, and notifying the called party of the call access comprises:
sending, by the MCC platform, an access request to a Home Location Register, HLR;
forwarding, by the HLR, the access request to a called MSC; and
forwarding, by the called MSC, the access request to the called party.

7. The method for realizing a called-party confirmation paying service according to claim 4, wherein the receiving, by the MCC platform, the response made by the called party for the notice to connect the speech path between the calling party and the called party comprises:
receiving, by a called MSC, a result of the response made by the called party for an access request;
forwarding, by the called MSC, the result of the response to an HLR; and
receiving, by the MCC platform, the result of the response forwarded by the HLR.

8. The method for realizing a called-party confirmation paying service according to claim 4 or 5, wherein the acquiring, by the calling MSC, the roaming number of the called party comprises:
requesting, by the calling MSC, to acquire, from an HLR, called routing information;
requesting, by the HLR, to acquire, from a called MSC, the roaming number of the called party;
sending, by the called MSC, the roaming number of the called party to the HLR; and
sending, by the HLR, the roaming number of the called party to the calling MSC.

9. The method for realizing a called-party confirmation paying service according to claim 1, wherein after the receiving the response made by the called party for the notice to connect the speech path between the calling party and the called party, the method further comprises:
sending, by a called MSC, a release request to a calling MSC after the called party hangs up;
reporting, by the calling MSC, the hang-up event to the MCC platform; and
sending, by the MCC platform, a Release Call, RC, to the calling MSC, and releasing the speech path between the calling party and the called party.

10. The method for realizing a called-party confirmation paying service according to claim 9, wherein after the sending, by the called MSC, the release request to the calling MSC after the called party hangs up, the method further comprises:
forwarding, by the calling MSC, the release request to the MCC platform; and
sending, by the MCC platform, the release request to the calling MSC.

11. A method for realizing a called-party confirmation paying service, **characterized by** comprising:
receiving, by a mobile collect call, MCC, platform, information sent by a calling party;
returning, by the MCC platform, response information to the calling party;
notifying, by the MCC platform, a called party of a call access, and receiving a response made by the called party for the notice;
calling, by the MCC platform, the calling party, and making, by the calling party, an answer for connecting a speech path between the calling party and the called party for the call; and
sending, by the MCC platform, a called-party paying request, and starting charging.

12. The method for realizing a called-party confirmation paying service according to claim 11, wherein the notifying, by the MCC platform, the called party of the call access, and receiving the response made by the called party for the notice comprises:
calling, by the MCC platform, the called party to a Gateway Mobile Switching Center, GMSC;
acquiring, by the GMSC, a roaming number of the called party;
connecting, by the GMSC, the call to the called party according to the roaming number of the called party; and
performing, by the MCC platform, Play Announcement, PA, on the called party, and notifying the called party of the call access.

13. The method for realizing a called-party confirmation paying service according to claim 12, wherein the calling, by the MCC platform, the calling party, and making, by the calling party, the answer for connecting the speech path between the calling party and the called party for the call comprises:
calling, by the MCC platform, the calling party to the GMSC;
acquiring, by the GMSC, a roaming number of the calling party;
connecting, by the GMSC, the call to the calling party according to the roaming number of the calling party; and
making, by the calling party, the answer for the call, and establishing the speech path between the calling party and the called party.

14. The method for realizing a called-party confirmation paying service according to claim 12, wherein the acquiring, by the GMSC, the roaming number of the called party comprises:
requesting, by the GMSC, to acquire, from an Home Location Register, HLR, called routing information;
requesting, by the HLR, to acquire, from a called MSC, the roaming number of the called party;
sending, by the called MSC, the roaming number of the called party to the HLR; and
sending, by the HLR, the roaming number of the called party to the GMSC.

15. The method for realizing a called-party confirmation paying service according to claim 13, wherein the acquiring, by the GMSC, the roaming number of the calling party comprises:
requesting, by the GMSC, to acquire, from an HLR, routing information of the calling party;
requesting, by the HLR, to acquire, from a calling MSC, the roaming number of the calling party;
sending, by the calling MSC, the roaming number of the calling party to the HLR; and
sending, by the HLR, the roaming number of the calling party to the GMSC.

16. A system for realizing a called-party confirmation paying service, comprising: a calling Mobile Switching Center, MSC (601), a called MSC (603), and a mobile collect call, MCC, platform (602), wherein
the calling MSC (601) is configured to receive a call request initiated by a calling party, and connect the call to the MCC platform (602);
the MCC platform (602) is configured to connect the call to the called MSC (603), and send a called-party paying request after a speech path is connected between the calling party and a called party; and
the called MSC (603) is configured to connect the call to the called party.

17. The system for realizing a called-party confirmation paying service according to claim 16, further comprising:
a Home Location Register, HLR (604), configured to store and forward a roaming number of the called party.

18. A system for realizing a called-party confirmation paying service, comprising: a calling Mobile Switching Center, MSC (701), a called MSC (704), a Gateway MSC, GMSC (703), and a mobile collect call (MCC) platform (702), wherein
the calling MSC (701) is configured to receive a call request initiated by a calling party, and connect the call to the MCC platform (702);
the MCC platform (702) is configured to connect the call to GMSC (703), and send a called-party paying request after a speech path is connected between the calling party and a called party;
the GMSC (703) is configured to receive the call initiated by the MCC platform (702), acquire a roaming number of the calling party or the called party, and connect the call to the calling party or the called party according to the roaming number; and
the called MSC (704) is configured to connect the call to the called party.

19. The system for realizing a called-party confirmation paying service according to claim 18, further comprising:
a Home Location Register, HLR (705), configured to store or forward the roaming number of the calling party or the called party.
